# EUROPÄISCHE PATENTSCHRIFT

(11) **EP 3 160 646 B1**
(45) Veröffentlichungstag und Bekanntmachung des Hinweises auf die Patenterteilung: **23.02.2022**
(21) Anmeldenummer: 15734568.7
(22) Anmeldetag: 18.06.2015
(51) Int. Cl.: B01L 3/00, B01L 3/02

(54) **VERFAHREN UND VORRICHTUNG ZUR ÜBERFÜHRUNG VON FLÜSSIGKEITEN**
METHOD AND DEVICE FOR THE TRANSFER OF LIQUIDS
PROCÉDÉ ET DISPOSITIF DE TRANSFERT DE LIQUIDES

(30) Priorität: 27.06.2014 EP 14002201
(43) Veröffentlichungstag der Anmeldung: 03.05.2017
(73) Patentinhaber: Euroimmun Medizinische Labordiagnostika AG, 23560 Lübeck (DE)
(72) Erfinder: STÖCKER, Winfried, 23627 Groß Grönau (DE); KOWTUN, Alexander, 23562 Lübeck (DE); MALTZAHN, Bianca, 23942 Dassow (DE); KOSCHINAT, Lars, 23626 Warnsdorf (DE); RICHTER, Lars, 23552 Lübeck (DE)
(86) Internationale Anmeldenummer: PCT/EP2015/001230
(87) Internationale Veröffentlichungsnummer: WO 2015/197176

(56) Entgegenhaltungen:
- EP-A2- 1 525 918
- WO-A1-2010/043271
- WO-A1-2014/005669
- US-A1- 2001 053 891
- US-A1- 2006 032 746
- US-A1- 2010 238 287

## Beschreibung

Die vorliegende Erfindung betrifft ein druckdichtes Vorratsgefäß enthaltend eine Flüssigkeit, wobei das Vorratsgefäß einen Innenboden und eine Oberseite aufweist und mit einem Verschluss druckabschließend verschlossen ist, und wobei die Beschaffenheit des Vorratsgefäßes das druckabschließende Einstechen von wenigstens zwei Hohlnadeln gestattet;
ein Verfahren zum Überführen einer Flüssigkeit aus einem Vorratsgefäß in ein Reaktionsgefäß, umfassend die Schritte Bereitstellen des erfindungsgemäßen Vorratsgefäßes, druckabschließendes Einstechen einer ersten Hohlnadel, die mit einem Spülflüssigkeitsreservoir verbunden ist, druckabschließendes Einstechen einer zweiten Hohlnadel, die mit dem Reaktionsgefäß verbunden ist, Einleiten von Spülflüssigkeit über die erste Hohlnadel aus dem Spülflüssigkeitsreservoir in das Vorratsgefäß unter Austreiben der Flüssigkeit über die zweite Hohlnadel aus dem Vorratsgefäß in das Reaktionsgefäß sowie eine zur Durchführung dieses Verfahrens geeignete Vorrichtung. Ferner betrifft die Erfindung eine Vorrichtung zum Überführen einer Flüssigkeit aus einem Vorratsgefäß in ein Reaktionsgefäß.

Für eine Vielzahl von technischen Verfahren auf den Gebieten der Chemie, Biotechnologie, Pharmazie und Medizin müssen mehrere, jeweils nur mit großem Aufwand herstellbare oder abfüllbare flüssige Reagenzien eingesetzt werden. Es ist dann sinnvoll, nicht jedes davon für jeden Verfahrensdurchlauf neu herzustellen, sondern in einem Durchgang eine für mehrere Durchläufe ausreichende Menge zuzubereiten, die dann in geeigneten Portionen bis zur Verwendung gelagert werden kann.

Abgesehen von wirtschaftlichen und logistischen Vorteilen führt dies gerade auf dem Gebiet der Medizin, genauer der Labordiagnostik, zur Minimierung der Fehleranfälligkeit des Gesamtsystems, da für jeden Durchlauf des erwünschten diagnostischen Verfahrens praktisch identische Reagenzien eingesetzt werden können. Ist ein Resultat uneindeutig, so kann leicht überprüft werden, ob eine mangelnde Qualität der verwendeten Reagenzien die Ursache für die Uneindeutigkeit war.

Jedoch erschwert der Trend zur Miniaturisierung im Bereich der Analytik und Diagnostik - die Verkleinerung von Reaktionsansätzen bis auf das unbedingt notwendige Mindestvolumen zur Einsparung der oft hochpreisigen Reagenzien - die Portionierung, gerade dann, wenn die einzelne Portion ein geringes Volumen hat und im Extremfall nur wenige Mikroliter umfasst. Je kleiner das Volumen, desto höher ist der relative Verlust bei der Überführung der flüssigen Phase von einem Behälter zum anderen durch unspezifische Adsorption an Oberflächen und durch jedem Gerät innewohnende Totvolumina.

Die Überführung geringer Volumina bedingt häufig auch eine geringere Reproduzierbarkeit des Verfahrens, da Zufallseffekte wie unterschiedliche Verdunstung aufgrund von Temperaturunterschieden, Erschütterungen oder technisch bedingte Schwankungen der eingesetzten Mengen sich stärker auf das Ergebnis auswirken.

Ein besonderes Problem stellen inhomogene Flüssigkeiten dar, beispielsweise Suspensionen von Beads in wäßriger Lösung, deren Dichte höher ist als die von Wasser, so dass die Beads zu Boden sinken können. Wird eine solche wässrige Lösung zur Homogenität gemischt und danach portioniert, so nimmt der Anteil der Beads in der wässrigen Phase während der Portionierung ab, bis alle Beads sedimentiert sind. Entsprechend sinkt die Zahl der Beads pro Portion, und zu Beginn der Portionierung abgefüllte Portionen weisen eine höhere Menge an Beads auf als die später abgefüllten.

Zusätzlich lagern sich derartige Beads in flüssiger Phase leicht an Oberflächen an, beispielsweise unterhalb des Deckels des Vorratsgefäßes. Auch dies erschwert die Entnahme von Portionen mit gleicher Konzentration der Beads, insbesondere bei automatisierten Vorgängen, bei denen die Lage der Beads innerhalb des Tranport-gefäßes und deren vollständige Überführung nicht visuell überprüft wird.

Für viele miniaturisierte Systeme werden Beads als Träger für Reagenzien eingesetzt. Beispielsweise können sie auf dem Gebiet der Immundiagnostik Träger für immobilisierte Antigene sein, an die in menschlichen Proben nachzuweisende Antikörper binden. Werden derartige Beads mit einer flüssigen Probe inkubiert, so kommt es bei Anwesenheit der Antikörper zur Bildung des Antigen-Antikörper-Komplexes, der am Bead immobilisiert ist. Nach einem Waschschritt kann dieser Komplex mit geeigneten Reagenzien, z. B. einem markierten sekundären Antikörper, nachgewiesen werden. Auf diesem Prinzip beruhen die im Handel erhältlichen Random-Access-Analyzer. Die Beads werden üblicherweise in wässrigen Lösungen geliefert und bis zur Verwendung aufbewahrt.

Demnach besteht Bedarf an einem automatisierbaren System zur quantitativen, d. h. möglichst vollständigen Überführung von einer geringvolumigen Flüssigkeit von einem Vorratsgefäß in ein Reaktionsgefäß.

Im Stand der Technik wurde dieses Problem mit zwei Ansätzen gelöst: Einerseits wird ein flüssiges Reagenz nach der Herstellung nicht in ein Vorratsgefäß eingebracht, sondern direkt in das für den nächsten Verfahrensschritt vorgesehene Reaktionsgefäß.

Problematisch ist an diesem Ansatz, dass das Reaktionsgefäß ein deutlich größeres Volumen haben muss als ein Vorratsgefäß, da ersteres Raum für zusätzliche Reaktionspartner, Lösungsmittel u. ä. bieten muss. Die Bevorratung erfordert damit erheblichen Platz, was insbesondere bei gefroren zu haltenen Reagenzien Schwierigkeiten bereitet. Bei flüchtigen Reagenzien führt das zusätzliche Volumen zusätzlich dazu, dass ein Teil aus der flüssigen Phase in die Gasphase entweichen kann. Nicht zuletzt kommt dieser Ansatz spätestens dann an seine Grenzen, wenn mehrere auf Vorrat gehaltene Reagenzien eingesetzt werden müssen, Überführungen zwischen mehreren Gefäßen also unvermeidlich sind.

Ein anderer Ansatz für die Überführung inhomogener Flüssigkeiten sieht vor, dass letztere während der Überführung ständig in Bewegung gehalten werden, beispielsweise durch Rühren oder Schütteln. Die Phase wird somit konstant homogenisiert. Abgesehen von dem zusätzlichen apparativen Aufwand und Platzbedarf für die Homogenisierung, beispielsweise in Form eines zusätzlichen Rührers, gerade bei der parallelen Prozessierung einer Vielzahl von Proben, löst dies aber nicht das Problem der Totvolumina. Ganz im Gegenteil muss das Vorratsgefäß zum Rühren groß genug sein, um einen Rührmagneten zu beherbergen, was größere Mindest- und Totvolumina bedingt.

Aus der WO2014/005669A1 ist ein Grundprinzip einer Kammer bekannt, welche abgeschlossen ist und in welche Flüssigkeit eingebracht werden kann. Hierbei kann eine Dichtung bzw. Abdichtung so durchstochen werden von einer Nadel, sodass die Einstichstelle abgedichtet ist. Die Kammer kann mittels einer Pumpvorrichtung einem Spülvorgang ausgesetzt werden, bei welchem aus einem oder mehreren Behältern Flüssigkeit eingebracht werden kann und mittels einer Pumpe aus der Kammer herausgepumpt werden kann.

Aus der WO2010/043271A1 sind kombinierte, miteinander verschweißte Nadeln bekannt. Eine der Nadeln ist hierbei derart ausgestaltet, dass Ihr Ende an geschrägt ist und eine Hohlnadel ist.

Das Dokument US2010/238287A1 offenbart ein elastisches Material, welches geeignet ist, um von Nadeln durchstochen zu werden.

Die US2006/032746A1 beschreibt eine Ausgestaltung einer Nadel als eine Hohlnadel.

Die EP1525918A2 offenbar unterschiedliche Konfigurationen von Nadeln, welche Hohlnadeln sein können.

Die US2001/053891A1 offenbart eine Array-Anordnung von Nadeln für das Einleiten von Flüssigkeiten.

Vor diesem Hintergrund besteht die der vorliegenden Erfindung zu Grunde liegende Aufgabe darin, eine Vorrichtung bereitzustellen, mit der eine Flüssigkeit unter möglichst geringen Verlusten, idealerweise quantitativ, aus einem Vorratsgefäß in ein anderes Gefäß überführt werden kann. Dies betrifft besonders den Fall, dass die Flüssigkeit inhomogen ist und beispielsweise Feststoffe wie Partikel oder Beads enthält. In einer bevorzugten Ausführungsform bedeutet der Begriff "inhomogene flüssige Phase", dass die flüssige Phase neben einem flüssigen Hauptbestandteil wenigstens einen weiteren Bestandteil in einer davon getrennten Phase aufweist, beispielsweise eine weitere Flüssigkeit, die sich mit dem flüssigen Hauptbestandteil nicht mischt, oder einen Feststoff.

Eine weitere, der vorliegenden Erfindung zu Grunde liegende Aufgabe besteht darin, eine Vorrichtung zur Durchführung analytischer Nachweisverfahren bereitzustellen, wobei der Platzbedarf, der Verlust an Flüssigkeit und/oder die Dauer der Überführungoder des gesamten Nachweisverfahrens gegenüber den im Stand der Technik beschriebenen Verfahren verringert sind, wohingegen die Reproduzierbarkeit erhöht ist.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Ein erfindungsgemäßes Verfahren ist in Anspruch 1 definiert. Eine erfindungsgemäße Vorrichtung ist in Anspruch 4 definiert. Vorgeschlagen wird ferner ein druckdichtes Vorratsgefäß enthaltend eine Flüssigkeit, wobei das Vorratsgefäß einen Innenboden und eine Oberseite aufweist und mit einem Verschluss druckabschließend verschlossen ist, und wobei die Beschaffenheit des Vorratsgefäßes das druckabschließende Einstechen von wenigstens zwei Hohlnadeln gestattet.

In einer bevorzugten Ausführungsformweist das Vorratsgefäß eine Innenhöhe H und dessen Innenboden einen Durchmesser D auf und das Verhältnis von D zu H wenigstens 1:2, bevorzugter 1:5, noch bevorzugter 1:10 beträgt.

In einer bevorzugten Ausführungsform umfasst das Vorratsgefäß einen zylindrischen Innenraum.

In einer bevorzugten Ausführungsform gestattet der Verschluss das druckabschließende Einstechen einer Hohlnadel, wobei es sich bei dem Verschluss bevorzugt um einen Deckel aus Kunststoff oder Aluminium, noch bevorzugter in Form einer Folie handelt.

In einer bevorzugten Ausführungsform umfasst das Vorratsgefäß eine erste und eine zweite druckabschließend eingestochene Hohlnadel.

Die der Erfindung zu Grunde liegende Aufgabe wird in einem ersten Aspekt gelöst durch ein Verfahren zum Überführen einer Flüssigkeit aus einem Vorratsgefäß in ein Reaktionsgefäß, umfassend die Schritte
a) Bereitstellen des erfindungsgemäßen Vorratsgefäßes, wobei das Vorratsgefäß einen Innenboden und eine Oberseite aufweist und mit einem Verschluss druckabschließend verschlossen ist und wobei die Beschaffenheit des Vorratsgefäßes das druckabschließende Einstechen von wenigstens zwei Hohlnadeln gestattet, und
b) druckabschließendes Einstechen einer ersten Hohlnadel, die mit einem Spülflüssigkeitsreservoir verbunden ist, und
c) druckabschließendes Einstechen einer zweiten Hohlnadel, die mit dem Reaktionsgefäß verbunden ist, und
d) Einleiten von Spülflüssigkeit über die erste Hohlnadel aus dem Spülflüssigkeitsreservoir in das Vorratsgefäß unter Austreiben der Flüssigkeit über die zweite Hohlnadel aus dem Vorratsgefäß in das Reaktionsgefäß,
   wobei die beiden Hohlnadeln in Form einer Doppelnadel ausgebildet sind, bei welcher die beiden Hohlnadeln über eine Längsachse in paralleler Anordnung mit gleicher Orientierung miteinander verbunden sind,
   und wobei die erste Hohlnadel mehrere Austrittsöffnungen an ihrem Ende aufweist, so dass der Strahl der daraus austretenden Flüssigkeit geteilt wird, so dass er in wenigstens zwei verschiedene Richtungen gerichtet ist.

In einer bevorzugten Ausführungsformumfasst das erfindungsgemäße Verfahren weiter
e) Kontaktieren der Flüssigkeit im Reaktionsgefäß mit wenigstens einem Reaktanden unter Ablauf einer Reaktion, und
f) optional währenddessen oder anschließend: Detektieren der Reaktion.

Vorzugsweise ist das Verfahren so ausgestattet, dass die Enden der beiden Hohlnadeln entlang der Querachse des Vorratsgefäßes an verschiedenen Punkten liegen, so dass ein Kurzschluss vermieden wird, bei welchem aus der ersten Hohlnadel austretende Flüssigkeit direkt ohne nennenswerte Durchwanderung des Volumens der Flüssigkeit in die zweite Hohlnadel eintritt.

Die der Erfindung zu Grunde liegende Aufgabe wird ferner gelöst durch eine Vorrichtung zum Überführen einer Flüssigkeit aus einem Vorratsgefäß in ein Reaktionsgefäß umfassend
ein Vorratsgefäß, wobei das Vorratsgefäß einen Innenboden und eine Oberseite aufweist und mit einem Verschluss druckabschließend verschlossen ist und wobei die Beschaffenheit des Vorratsgefäßes das druckabschließende Einstechen von wenigstens zwei Hohlnadeln gestattet, wobei das Vorratsgefäß über eine Zuleitung mit einer ersten Hohlnadel verbunden ist,
ein Mittel zum Halten des Vorratsgefäßes,
ein Reaktionsgefäß, das über eine Zuleitung mit einer zweiten Hohlnadel verbunden ist,
ein Spülflüssigkeitsreservoir,
ein Mittel zum Pumpen der Flüssigkeit,
ein Mittel zum Einstechen der ersten Hohlnadel in das Vorratsgefäß,
ein Mittel zum Einstechen der zweiten Hohlnadel in das Vorratsgefäß,
optional wenigstens ein Mittel zur Detektion der Reaktion im Reaktionsgefäß,
wobei die erste und die zweite Hohlnadel zum druckabschließenden Einstechen in das Vorratsgefäß und zum Überführen von Flüssigkeit eingerichtet sind, im Falle der ersten Hohlnadel aus dem Spülflüssigkeitsreservoir in das Vorratsgefäß und im Falle der zweiten Hohlnadel aus dem Vorratsgefäß in das Reaktionsgefäß,
wobei die beiden Hohlnadeln in Form einer Doppelnadel ausgebildet sind, bei welcher die beiden Hohlnadeln über eine Längsachse in paralleler Anordnung mit gleicher Orientierung miteinander verbunden sind,
und wobei die erste Hohlnadel mehrere Austrittsöffnungen an ihrem Ende aufweist, so dass der Strahl der daraus austretenden Flüssigkeit geteilt wird, so dass er in wenigstens zwei verschiedene Richtungen gerichtet ist.

Vorzugsweise ist die Vorrichtung so ausgestattet, dass die Enden der beiden Hohlnadeln entlang der Querachse des Vorratsgefäßes an verschiedenen Punkten liegen, so dass ein Kurzschluss vermieden wird, bei welchem aus der ersten Hohlnadel austretende Flüssigkeit direkt ohne nennenswerte Durchwanderung des Volumens der Flüssigkeit in die zweite Hohlnadel eintritt.

In einer bevorzugten Ausführungsform stellt die Flüssigkeit eine inhomogene flüssige Phase dar, bevorzugt eine wässrige Lösung umfassend Beads.

In einer bevorzugten Ausführungsform stellt die Flüssigkeit eine homogene flüssige Phase dar, bevorzugt umfassend ein biologisches oder chemisches Agens in wässriger Lösung oder flüssige Probe, besonders bevorzugt eine Blutprobe, am bevorzugtesten Serum.

In einer bevorzugten Ausführungsform ist bzw. wird die erste Hohlnadel, bevorzugt zusätzlich auch die zweite Hohlnadel, durch die Oberseite des Vorratsgefäßes, bevorzugt durch einen dort befindlichen Verschluss, noch bevorzugter Deckel, eingestochen.

In einer bevorzugten Ausführungsform sind bzw. werden die erste und die zweite Hohlnadel in Form einer Koaxialnadel eingestochen.

In einer bevorzugten Ausführungsform ist die Austrittsöffnung der ersten Hohlnadel im unteren Viertel und die Austrittsöffnung der zweiten Hohlnadel im oberen Viertel des Vorratsgefäßes lokalisiert.

In einer bevorzugten Ausführungsform ist die Austrittsöffnung der ersten Hohlnadel derart eingerichtet, dass sich der Strom der eingeleiteten Spülflüssigkeit verzweigt und ein Teil davon in Richtung der Oberseite und ein anderer Teil davon in Richtung des Innenbodens gerichtet ist.

Die Erfindung beruht auf der überraschenden Erkenntnis der Erfinder, dass eine Flüssigkeit unter Verwendung der erfindungsgemäßen Vorratsgefäße, Vorrichtungen und Verfahren automatisierbar und reproduzierbar überführt werden kann, auch für den technisch anspruchsvollen Fall, dass sie eine inhomogene Phase aufweist. Eine Ablagerung von Feststoffen, z. B. Beads, wird vermieden und eine Ablagerung in strömungs-unzugänglichen Winkeln unterbunden.

Die Erfindung beruht weiterhin auf der überraschenden Erkenntnis der Erfinder, dass erfindungsgemäß eine praktisch quantitative Überführung der Flüssigkeit möglich ist, womit bei diagnostischen Verfahren der Verbrauch von aufwändig herzustellenden Reagenzien wie Antikörperlösungen oder von nur begrenzt verfügbaren Proben, z. B. Blutproben von verstorbenen Patienten, minimiert werden kann.

Die Erfindung betrifft die Überführung von einer Flüssigkeit, die in einem Vorratsgefäß enthalten ist. In einer bevorzugten Ausführungsform wird unter dem Begriff "Flüssigkeit", wie hierin verwendet, ein Stoff oder eine Stoffmischung verstanden, die bei 20°C und unter Atmosphärendruck zu wenigstens 10, bevorzugt 20, 30, 40, 50, 75 Gewichtsprozent aus einer Flüssigkeit besteht, die jedoch inhomogen sein kann, insbesondere dahingehend, dass sie Feststoffe enthält. Die Flüssigkeit ist zur Durchführung des erfindungsgemäßen Verfahrens flüssig, kann aber auch im gefrorenen Zustand im Vorratsgefäß gelagert werden. Das Vorratsgefäß ist bevorzugt überwiegend mit Flüssigkeit befüllt, d.h. beispielsweise zu wenigstens 75, 80, 90 oder 95 %. Die Gasphase kann aus Luft bestehen oder ein chemisch inertes Schutzgas, beispielsweise Argon oder Stickstoff, umfassen. Das Volumen des Vorratsgefäßes kann 5 µl bis 1 I, bevorzugter 10 µl bis 10 ml, noch bevorzugter 20 µl bis 5 ml, noch bevorzugter 25 µl bis 1 ml, am bevorzugtesten 30 µl bis 250 µl betragen

Für das erfindungsgemäße Verfahren ist es essentiell, dass das Vorratsgefäß druckdicht ist. Weiterhin ist es so beschaffen, dass es das druckabschließende Einstechen von zwei Hohlnadeln gestattet, bevorzugt Hohlnadeln, bei denen es sich um angeschliffene Edelrohrabschnitte handelt. Bevorzugt beträgt deren Außendurchmesser 0,5 bis 5 mm, besonders bevorzugt 1 mm, und ihr Innendurchmesser 0,1 bis 3 mm, besonders bevorzugt 0,2 bis 0,7 mm, mit der Maßgabe dass der Innendurchmesser geringer ist als der Außendurchmesser. Beispielsweise kann das Gefäß eine Wand aus einer 0,3 mm dicken Schicht eines geeigneten Kunststoffes wie Polyethylen aufweisen. Derartige Gefäße können durch Spritzgruß erhalten werden. Das Gefäß weist einen Verschluss auf, der aus dem gleichen Material oder einem anderen Material wie die Wand besteht und reversibel oder irreversibel geöffnet werden kann. Beispielsweise kann es sich um einen Schraubverschluss oder einen Klappdeckel handeln. Genau so ist der Verschluss eines Plastikbehälters mit einer Folie aus einem anderen Material möglich, beispielsweise einer Kunststofffolie oder einer Aluminiumfolie. Die Dicke der Folie kann 5 µm bis 5 mm, bevorzugt 10 µm bis 1 mm, noch bevorzugter 25 µm bis 250 µm betragen. Weiterhin kommt als Verschluss ein mit einem Septum, z. B. einer Silikondichtung, verschließbares Fenster in Frage.

In einer bevorzugten Ausführungsform sind oder werden die beiden Hohlnadeln relativ zur Längsachse des Vorratsgefäßes mittig eingestochen. Das bedeutet, dass der Punkt auf der Längsachse, der zwischen dem Einstichpunkt der ersten Hohlnadel und dem Einstichpunkt der zweiten Hohlnadel liegt und zu beiden Einstichpunkten auf der Längsachse den gleichen Abstand aufweist, auch zu den beiden Enden des Vorratsgefäßes entlang dessen Längsachse den gleichen Abstand aufweist, wobei bei letzterem Abstand eine Abweichung möglich ist, d.h. eine Verlängerung des Abstandes der Einstichstelle der ersten Hohlnadel zum ihr zugewandten Ende des Vorratsgefäßes und eine entsprechende Verkürzung des Abstandes der Einstichstelle der zweiten Hohlnadel zum anderen Ende des Vorratsgefäßes von bis zu 30, bevorzugter 20, 15, 10, am bevorzugtesten 5 % der Länge der Längsachse.

Bei der Flüssigkeit kann es sich um eine Lösung biologischer oder chemischer Agenzien handeln oder um eine Probe menschlichen oder tierischen Ursprungs, die einen nachzuweisenden Reaktanden enthält. Besonders bevorzugt handelt es sich um eine Probe umfassend eine Körperflüssigkeit ausgewählt aus der Gruppe umfassend Serum, Urin, Liquor oder Speichel oder eine Verdünnung oder verarbeitete Form davon. Alternativ kann es sich um eine Probe aus Lebensmitteln, Getränken, Trink- oder Badewasser, Stuhl, Bodenmaterial o. ä. handeln. Bevorzugt wird die Probe nach der Gewinnung in geeigneter Weise verarbeitet, im Fall einer Blutprobe beispielsweise durch Abzentrifugieren der nichtlöslichen Bestandteile des Blutes, und/oder haltbar gemacht.

Das Vorratsgefäß weist einen Innenboden und eine Innenhöhe H auf, worunter der der enthaltenen Flüssigkeit geometrisch zugängliche Boden bzw. die Höhe der der Flüssigkeit zugänglichen Seitenwand verstanden wird. Bevorzugt weist das Gefäß ein möglichst hohes Verhältnis von Innenhöhe zu Innenboden, gemessen in Form von dessen Innendurchmesser D, auf, so dass eine möglichst kleine Innenbodenfläche für die Absorption von sedimentierten Stoffen am Boden besteht. Das Verhältnis von D zu H beträgt bevorzugt wenigstens 1:2, 1:2,5, 1:3, 1:4, 1:5, 1:7,5, 1:10, 1:15 oder 1:20, wobei die Längsachse entlang der längeren Seite verläuft und zwei Enden aufweist. An einem der Enden befindet sich die Oberseite. Die Oberseite ist bevorzugt an dem Ende, das bei der durch die Form des Vorratsgefäßes vorgegebenen Orientierung beim Gebrauch des Vorratsgefäßes oben liegt. Der Innenboden weist bevorzugt eine kreisförmige Form auf, so dass Ablagerungen in strömungsunzugänglichen Ecken vermieden werden, ebenso die vertikal gegenüberliegende Innendecke. Hingegen ist bevorzugt wenigstens die äußere Form von Boden und/oder Oberseite des Vorratsgefäßes mit Ecken, beispielsweise quadratisch, ausgebildet, um das Greifen und Halten des Gefäßes in einer bestimmten Orientierung zu erleichtern.

Erfindungsgemäß werden eine erste und eine zweite Hohlnadel in das Vorratsgefäß eingestochen. Die erste Hohlnadel dient zur Zuleitung, bevorzugt einer Spülflüssigkeit, die zweite zum Abfluss der Flüssigkeit. Beide Hohlnadeln werden druckabschließend eingestochen und haben bevorzugt den gleichen Durchmesser, so dass die Einleitung einer Spülflüssigkeit den Austritt eines äquivalenten Volumens an Flüssigkeit über die zweite Hohlnadel bewirkt. In einer bevorzugten Ausführungsform gilt das Vorratsgefäß als druckdicht, wenn die Einleitung von 1 ml Wasser in das vollständig gefüllte Vorratsgefäß über 100 Sekunden über eine druckabschließend eingestochene Hohlnadel den Austritt von wenigstens 900, bevorzugter 950, noch bevorzugter 990 µl Wasser in der gleichen Zeit über eine zweite druckabschließend eingestochene Hohlnadel gleicher Bauart bewirkt. Das Einstechen gilt bevorzugt dann als druckabschließend ausgeführt, wenn bei Verschluss der eingestochenen Hohlnadel das Vorratsgefäß druckdicht bleibt. Der Durchmesser der Hohlnadeln muss so bemessen sein, dass etwaige in der Flüssigkeit enthaltene Feststoffe wie Beads die Nadeln nicht verstopfen können.

Als Hohlnadel kann jede Vorrichtung eingesetzt werden, die aus einem zum Einstechen geeignten Material besteht und einen Hohlkanal aufweist, über den Flüssigkeit zu- bzw. ausgetrieben wird. Bevorzugt handelt es um eine Hohlnadel aus Metall. Alternativ kann eine ausreichend harte, angespitzte Glas- oder Kunststoffkanüle verwendet werden.

Die Position der Austrittsöffnungen der ersten und zweiten Hohlnadel im Vorratsgefäß wird so gewählt, dass die Umwälzung der Flüssigkeit maximiert wird. Ein Kurzschluss, bei dem aus der ersten Hohlnadel austretende Flüssigkeit direkt ohne nenneswerte Durchwanderung des Volumens der Flüssigkeit in die zweite Hohlnadel eintritt, ist zu vermeiden. Entsprechend ist es zweckmäßig, die Austrittsöffnung der ersten Hohlnadel und die Eintrittsöffnung der zweiten Hohlnadel so zu positionieren, dass der Abstand beider Öffnungen zueinander maximiert ist. Dies kann über die Wahl der Einstichstelle für beide Hohlnadeln, die Länge, mit der die beiden Hohlnadeln in das Vorratsgefäß hineinragen, oder die Form des Vorratsgefäßes, beispielsweise das Einziehen einer Scheidewand, die die vom Flüssigkeitsstrom zurückzulegende Strecke zwischen den Hohlnadeln maximiert, eingestellt werden. In einer besonders bevorzugten Ausführungsform werden sowohl die erste als auch die zweite Hohlnadel durch den Verschluss des Vorratsgefäßes über die Oberseite eingestochen, die erste Hohlnadel ragt aber deutlich weiter ins Vorratsgefäß, bis kurz über den Boden, während die zweite Hohlnadel gerade über die Einstichstelle ins Vorratsgefäß hineinragt. Auf diese Weise trifft der ins Vorratsgefäß eintretende Flüssigkeitsstrom direkt auf am Boden befindliche Beads, wirbelt sie auf und minimiert die Ablagerung am Boden.

Erfindungsgemäß ist die Ausführung der beiden Hohlnadeln in Form einer Doppelnadel, bei der beide Nadeln unter wenigstens über die Längsachse paralleler Anordnung mit gleicher Orientierung verbunden sind, z. B. durch Zusammenlöten zweier Metallhohlnadeln, oder in Form einer Koaxialnadel. Im letzteren Fall weist die erste Hohlnadel einen kleineren Durchmesser als die zweite Hohlnadel auf und ist konzentrisch in deren Innenraum angeordnet, wobei die erste Hohlnadel länger als die zweite ist und so weit aus deren Austrittsöffnung hinausragt, dass es nicht zu einem Kurzschluss kommt. Sind erste und zweite Hohlnadel unter paralleler Anordnung und gleicher Orientierung miteinander verbunden, so können sie vorteilhaft zusammen in das Vorratsgefäß eingestochen werden.

In einer weiteren bevorzugten Ausführungsform wird eine Hohlnadel, bevorzugt die erste, über die Oberseite in das Vorratsgefäß eingestochen, und die andere, bevorzugt die zweite, von unten durch den Boden. Auf diese Weise kann der Strom der Spülflüssigkeit synergistisch mit der Graviatation wirken. Diese Anordnung ist besonders bei der Überführung einer Flüssigkeit mit einer homogenen Phase empfehlenswert, bei der sich keine Feststoffe in schlecht durchströmten Winkeln sammeln

Optional besteht die Möglichkeit, neben der ersten und zweiten Hohlnadel wenigstens eine weitere Hohlnadel druckabschließend einzustechen. Beispielsweise kann die Spülflüssigkeit zusätzlich über eine dritte Hohlnadel ins Vorratsgefäß eingeleitet werden, um die Strömung innerhalb des Vorratsgefäßes besser zu verteilen und das Ablagern von Feststoffen in der Flüssigkeit zu unterbinden. In diesem Fall können die Austrittsöffnungen der ersten und dritten Hohlnadel so positioniert und orientiert sein, dass die daraus austretende Spülflüssigkeit in Richtung des Boden bzw. der Oberseite des Vorratgefäßes strömt, bevorzugt so, dass sie senkrecht auftrifft, während die Austrittsöffnung der zweiten Hohlnadel relativ zur Längsachse des Vorratsgefäßes symmetrisch zwischen den anderen beiden Austrittsöffnungen positioniert ist.

Die Austrittsöffnung der ersten Hohlnadel, ist so gestaltet, dass der Strahl der daraus austretenden Flüssigkeit geteilt wird, so dass er in wenigstens zwei verschiedene Richtungen gerichtet ist, optional auch in mehr als zwei Richtungen. Dies wird durch mehrere, entsprechend orientiert Austrittsöffnungen am Ende der Hohlnadel erreicht. Dies ist insbesondere bei einer ersten Hohlnadel sinnvoll, wenn über diese Spülflüssigkeit ins Vorratsgefäß eingeleitet wird und die Austrittsöffnung nahe dem Innenboden oder der Oberseite positioniert wird, um eine gleichmäßige Durchströmung des Gefäßes zu ermöglichen und eine Ablagerung von in der Flüssigkeit enthaltenen Feststoffen zu unterbinden. Bei geteiltem Strahl der Flüssigkeit wird die erste Hohlnadel bevorzugt entlang der Längsachse mittig eingestochen, noch bevorzugter wird auch die zweite Hohlnadel mittig eingestochen. Der Kurzschluss wird dann dadurch verhindert, dass die Enden beider Hohlnadeln entlang der Querachse des Vorratsgefäßes an verschiedenen Punkten liegen, die entlang der Querachse möglichst weit voneinander entfernt liegen. Beispielsweise kann das Ende der ersten Hohlnadel, aus der Flüssigkeit austritt, bis kurz vor die der Einstichstelle gegenüber liegenden Wand liegen, während das Ende der zweiten Hohlnadel entlang der Querachse nahe der Einstichstelle liegt.

Erfindungsgemäß wird über die erste Hohlnadel eine Flüssigkeit aus dem Spülflüssigkeitsreservoir in das Vorratsgefäß geleitet. Die Zuleitung zwischen Spülflüssigkeitsreservoir und erster Hohlnadel, zwischen zweiter Hohlnadel und Reaktionsgefäß verläuft über dafür geeignete Mittel, beispielsweise chemisch inerte, druckdichte Plastikschläuche. Dazwischen können weitere Gefäße oder Vorrichtungen zum Prozessieren der Flüssigkeit geschaltet sein, beispielsweise zum Temperieren.

In einer bevorzugten Ausführungsform wird die Flüssigkeit unter Druck über die erste Hohlnadel in das Vorratsgefäß geleitet. Der Druck kann im einfachsten Fall bei Lagerung des Flüssigkeitsreservoirs über dem Vorratsgefäß durch die Gravitation erzeugt werden. Bevorzugt ist jedoch eine Druckerzeugung über eine geeignete Vorrichtung, beispielsweise eine Pumpe. Der sich im Vorratsgefäß aufbauende Druck treibt die darin enthaltene Flüssigkeit über die Eintrittsöffnung der zweiten Hohlnadel aus dem Vorratsgefäß hinaus. Alternativ kann auch auf der Seite der zweiten Hohlnadel Unterdruck angelegt werden.

Nach dem Einstechen der Nadeln wird Flüssigkeit in das Vorratsgefäß eingeleitet und dessen ursprünglicher Inhalt ausgetrieben. Dazu wird das Vorratsgefäß solange mit Flüssigkeit gespült, bis die Flüssigkeit überführt ist. Wird dies mit ausreichend Flüssigkeit getan, beispielsweise mit dem wenigstens 2-, 3-, 5-, 10-, 20-, 50- oder 100-fachen Volumen des Vorratsgefäßes, so kann die Überführung praktisch vollständig sein. Zweckmäßigerweise ist sie im Vorratsgefäß so konzentriert, dass sie nach der Verdünnung bei der Durchführung des erfindungsgemäßen Verfahrens in einer für die nachfolgende Reaktion geeigneten Konzentration vorliegt.

Nach der Überführung können die Hohlnadeln aus dem Vorratsgefäß entfernt und dasselbe aus der erfindungsgemäßen Vorrichtung entnommen werden. Bevorzugt ist das Vorratsgeäß zur Vermeidung von Kontaminationen ein Einwegartikel, der anschließend entsorgt werden kann.

Die Spülflüssigkeit wird mit einer Geschwindigkeit in das Vorratsgefäß eingeleitet, die eine möglichst rasche Überführung der flüssigen Phase gestattet. Andererseits muss sie so bemessen sein, dass in der Lösung enthaltene Agenzien intakt bleiben und nicht etwa unter Druckeinwirkung oder in Folge von Scherkräften präzipitieren, verklumpen oder auf sonstige Weise in ihrer Qualität beeinträchtigt werden. Beispielsweise kann die Geschwindigkeit 10 bis 10 000 µl/s, bevorzugter 50 bis 2000, am bevorzugtesten 100 bis 1000 µl/s betragen.

Die Spülflüssigkeit kann mit kontinuierlicher Geschwindigkeit eingeleitet werden. In einer bevorzugten Ausführungsform erfolgt jedoch, besonders bei Überführung einer inhomogenen Flüssigkeit, zunächst eine kurze Phase zum Aufwirbeln und Homogenisieren fester Komponenten der flüssigen Phase, gefolgt von der eigentlichen Überführung. Dazwischen kann eine Pause eingestellt werden, beispielsweise 1 bis 60, 2 bis 30 oder 5 bis 15 Sekunden.

Als Spülflüssigkeit kann jede Flüssigkeit dienen, solange sie die Brauchbarkeit der zur überführenden Flüssigkeit bei Kontakt im Vorratsgefäß und die Reaktion im Reaktionsgefäß nicht beeinträchtigt. In einer bevorzugten Ausführungsform sind die Eigenschaften der Spülflüssigkeit, bespielsweise Dichte und Hydrophobizität so gewählt, das die Vermischung mit der zu überführenden Flüssigkeit und die damit verbundene Verdünnung minimiert wird, besonders wenn letztere eine homogene flüssige Phase aufweist. Handelt es sich bei der zu überführenden Flüssigkeit um eine wässrige Lösung, so kann als Spülflüssigkeit eine hydrophobe, mit Wasser nicht mischbare Flüssigkeit eingesetzt werden, und umgekehrt.

In der erfindungsgemäßen Vorrichtung ist ein Mittel zum Fixieren des Vorratsgefäßes vorgesehen. Dabei handelt es sich im einfachsten Fall um eine Vertiefung, die an die Form des Vorratsgefäßes angepasst ist, so dass ein darin eingebrachtes Vorratsgefäß ausreichend stabil gehalten wird. Bevorzugt wird das Vorratsgefäß zusätzlich mit einer Halterung, einer Klammer oder dergleichen an zusätzlichen Punkten fixiert.

Bevorzugt weist die Vorrichtung darüber hinaus ein Transportmittel auf, beispielsweise einen Greifer, das die Entnahme des Vorratsgefäßes aus einer Aufbewahrungseinheit und den Transport zum und das Einsetzen in das Mittel zum Fixieren bewerkstelligt, ebenso die Entnahme nach Durchführung des Verfahrens. Überhaupt ist die erfindungsgemäße Vorrichtung bevorzugt derart ausgeführt, dass sämtliche Schritte des erfindungsgemäßen Verfahren ab dem Bereitstellen des Vorratsgefäßes vollständig automatisiert ausgeführt werden können.

Die erfindungsgemäße Vorrichtung kann so ausgestattet sein, dass eine Vielzahl, z. B. wenigstens 2, 4, 8, 10, 20, 50 oder 100 Vorratsgefäße parallel bearbeitet und ihr Inhalt in entsprechende Vorratsgefäße überführt werden kann. Dazu ist eine entsprechende Zahl von Sets jeweils umfassend eine erste und zweite Hohlnadel, eine Halterung mit Vorratsgefäß und entsprechende Zugänge zu wenigestens einer Spülflüssigkeit und wenigstens einem Reaktionsgefäß vorhanden. In einer bevorzugten Ausführungsform ist unter dem Begriff "Reaktionsgefäß", wie hierin verwendet, ein Gefäß zu verstehen, in dem der Inhalt des Vorratsgefäßes in geeigneter Weise prozessiert wird, typischerweise durch eine chemische oder physikalische Wechselwirkung.

Ein besonderer Vorteil der Erfindung besteht darin, dass eine beliebige Zahl und Kombination von Agenzien aus verschiedenen, praktisch spontan ausgewählten Vorratsgefäßen in ein Reaktionsgefäß überführt werden kann.

Die erfindungsgemäße Vorrichtung ist bevorzugt dafür ausgerichtet, eine Vielzahl von Vorratsgefäßen, Reagenzien und, optional, Proben zu lagern und suzessive bzw. nach Bedarf zu kombinieren und abzuarbeiten. Geeignete Lagerungsbedingungen, beispielsweise die Temperatur, Luftfeuchtigkeit, Lüftung bzw. nach Bedarf Vakuum oder chemisch inertes Schutzgas, können eingestellt werden. Dies ermöglicht dem Betreiber, verschiedenste Reagezien auf geringem Raum über längere Zeit bereitzuhalten und spontan einzusetzen und zu kombinieren.

Umfasst die zu überführende Flüssigkeit Feststoffe, insbesondere Beads, die im Zuge der Überführung verdünnt werden, für eine anschließende Verwendung aber konzentriert vorliegen sollten, so ist erfindungsgemäß eine Konzentrierung nach dem Austreiben aus dem Vorratsgefäß aber vor dem Einbringen ins Reaktionsgefäß möglich. Das Konzentrieren kann beispielsweise durch Anlegen von Unterdruck und Abziehen von Flüssigkeit oder Dekantieren, besonders bevorzugt aber dadurch bewerkstelligt werden, dass die Flüssigkeit durch ein Sieb geleitet wird, das die Feststoffe auffängt.

Bevorzugt weist die erfindungsgemäße Vorrichtung ein Mittel zur Detektion einer im Reaktionsgefäß ablaufenden Reaktion auf. Die Art des Detektors hängt von der Natur der nachzuweisenden Reaktion ab. Beispielsweise ist eine Detektion von Chemilumineszenz, UV/vis-Absorption, Radioaktivität, Fluoreszenz, Lichtstreuung, NMR/ESR-aktiven chemischen Gruppen, magnetischen Partikeln, Temperatur-, pH-, Leitfähigkeitsveränderungen oder dergleichen möglich. In einer besonders bevorzugten Ausführungsform handelt es sich um einen chemilumineszenzfähigen Detektor.

Das erfindungsgemäße Überführen von Flüssigkeit kann im Rahmen eines immundiagnostischen Verfahrens ausgeführt werden. Dabei wird eine menschliche oder tierische Probe, bevorzugt Blutprobe, auf die Anwesenheit von Antikörpern untersucht. Ob ein Antikörper nachweisbar ist, ist eine diagnostisch wichtige Information. Bevorzugt wird der Antikörper durch seine Bindung an ein Antigen nachgewiesen, das immobilisiert ist, besonders bevorzugt an Beads. Immundiagnostische Tests, die nach diesem Prinzip funktionieren, sind für zahlreiche Indikationen im Stand der Technik beschrieben, beispielsweise in der EP 2 199 303, DE 10 2009033281, WO 2010/009457 oder EP12183919.5.

Zur praktischen Durchführung wird ein erfindungsgemäßes Vorratsgefäß mit Beads bereitgestellt, an denen das Antigen immobilisiert ist. Zur Durchführung des Tests wird die Flüssigkeit mit den Beads erfindungsgemäß in ein Reaktionsgefäß überführt. Dort werden die Beads mit der Probe kontaktiert und anschließend gewaschen. War in der Probe Antikörper vorhanden, so ist dieser über seine Bindung an das Antigen an den Beads immobilisiert. Es folgt eine Inkubation mit einem Reagens zum Nachweis des Antikörpers. Dabei kann es sich um einen sekundären Antikörper handeln, der mit einem Enzym markiert ist, welches eine Chemilumineszenzreaktion, bei der Licht freigesetzt wird, katalysiert. Ist der Komplex aus Antigen, Antikörper und sekundärem markierten Antikörper vorhanden, so kann es in einem finalen Schritt nach Zugabe der Substrate für die Chemiluminszenzreaktion in Form von Licht nachgewiesen werden. Geeignete Agenzien sind im Stand der Technik beschrieben, beispielsweise in Ireland, D., und Samuel, D. (1989), Enhanced chemiluminscence ELISA for the detection for antibody to hepatitis B virus surface antigen, J. Biolum. Chemilumin., 159-163 und in "Acridinium Esters as Highly Specific Activity Labels in Immunoassays," Clin. Chemistry 19:1474-1478 (1984) und in US4842997 A. Sowohl die mit Antigen beschichteten Beads als auch die Probe, der sekundäre markierte Antikörper und die für die Reaktion erforderlichen Substrate können erfindungsgemäß aus Vorratsgefäßen in ein Reaktionsgefäß überführt werden.

Die Flüssigkeit kann eine homogene flüssige Phase aufweisen. Bevorzugt handelt es sich um zur diagnostischen Untersuchung abgenommene und optional aufbereitete menschliche oder tierische Proben, z. B. Blut, bevorzugt Blutserum, Urin, Liquor, Speichel oder Schweiß.

Die Flüssigkeit kann aber auch eine inhomogene Phase aufweisen und entweder zwei nicht oder nur begrenzt mischbare Flüssigkeiten oder einen festen Stoff in einer Flüssigkeit umfassen. In einer bevorzugten Ausführungsform handelt es sich bei der Flüssigkeit um Beads in wässriger Lösung. Solche Beads können mit daran immobilisierten biologischen Reagenzien versehen sein, z. B. als Antigen fungierenden Polypeptiden. Im Handel sind verschiedene Beads für zahlreiche Anwendungen erhältlich, überwiegend auf Kohlenhydrat (z. B. Agarose)- oder Kunststoffbasis. Sie enthalten aktive oder aktivierbare chemische Gruppen wie Carboxylgruppe, die für die Immobilisierung von Reagenzien genutzt werden können, z. B. von Antikörpern oder Antigenen. Bevorzugt handelt es sich um Beads mit einem durchschnittlichen Durchmesser von 0,2 µm bis 5 mm, 0,5 µm bis 1 mm, 0,75 µm bis 100 µm oder 1 µm bis 10 µm. Die Beads können mit einem Antigen beschichtet sein, das an einen diagnostisch relevanten Antikörper bindet, oder mit Affinitätsliganden, beispielsweise Biotin oder Glutathion. Bevorzugt umfasst die Flüssigkeit die Beads in Form einer wässrigen Suspension mit einem Beadgehalt von 10 bis 90 %, bevorzugter 20 bis 80, bevorzugter 30 bis 70, noch bevorzugter 40 bis 60 % (w/w).

In einer besonders bevorzugten Ausführungsform handelt es sich um paramagnetische Beads, die mit Hilfe eines Magneten leicht an einer Oberfläche konzentriert werden können. Zu diesem Zweck enthalten handelsübliche paramagnetische Beads meistens ein paramagnetisches Mineral, beispielsweise Eisenoxid. Ein Vielzahl geeigneter paramagnetischer Beads ist im Handel erhältlich.

Unabhängig vom Homogenitätszustand handelt es sich bevorzugt um eine wässrige flüssige Phase. Diese kann zur Konservierung geeignete Zusätze wie Ethanol oder Azid enthalten oder Stabilisatoren wie pH-Puffer, Glycerin oder Salze in physiologischen Konzentrationen, beispielweise zur Stabilisierung von biologischen oder chemischen Agenzien. Ein geeigneter Puffer ist beispielsweise 10 mM Natriumphosphat, 150 mM Natriumchlorid, 50% glycerol, und 0,02 (w/v) Natriumazid, pH 7.4.

Im Folgenden wird die Erfindung unter Bezugnahme auf die Figuren anhand von Ausführungsbeispielen erläutert. Die beschriebenen Ausführungsformen sind in jeder Hinsicht lediglich beispielhaft und nicht als einschränkend zu verstehen.

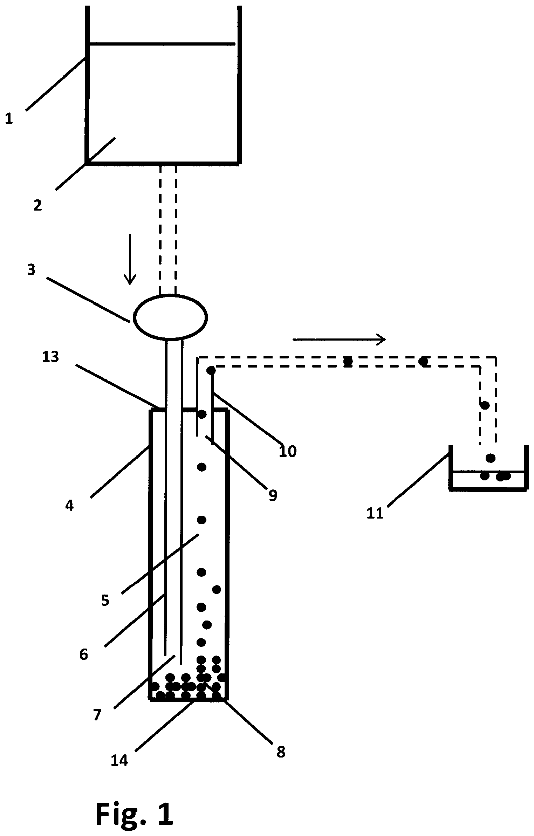

In **Fig. 1** ist ein Schema einer Ausführungsform einer vorgeschlagenen Vorrichtung mit einer Oberseite (13) und einem Innenboden (14) sowie mit einem Spülflüssigkeitsreservoir (1) enthaltend Spülflüssigkeit (2) gezeigt. Dieses ist über eine Zuleitung und über ein Mittel zum Pumpen (3) mit der ersten Hohlnadel (6) verbunden, die mit ihrer Austrittsöffnung (7) in das Vorratsgefäß (4) hineinragt, welches die zu überführende Flüssigkeit (5) mit Beads (8) enthält. Die zweite eingestochene Hohlnadel (10) mit ihrer Austrittsöffnung (9) ist mit dem Reaktionsgefäß (11) verbunden. Die Pfeile zeigen die Richtung des Flüssigkeitsstroms.

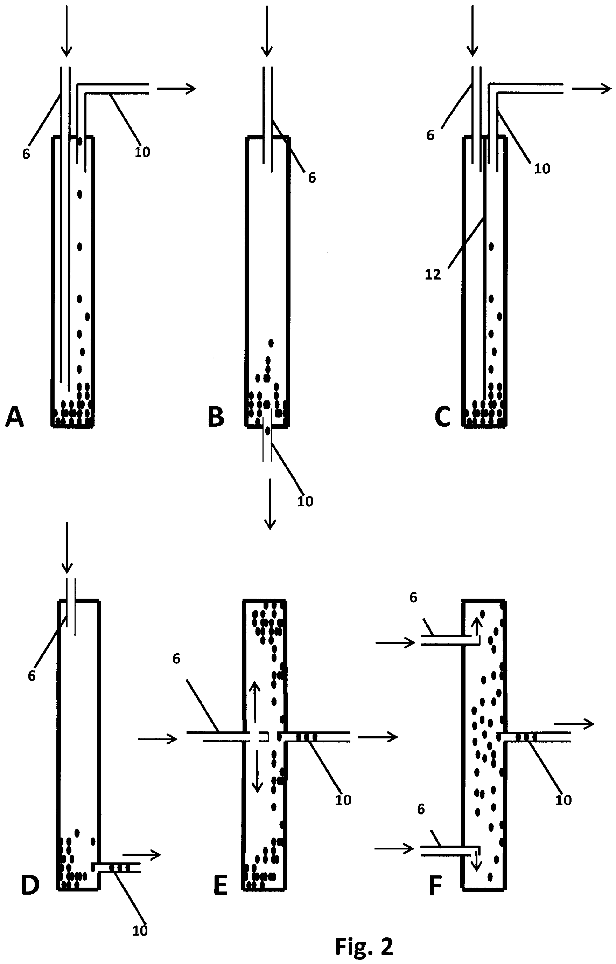

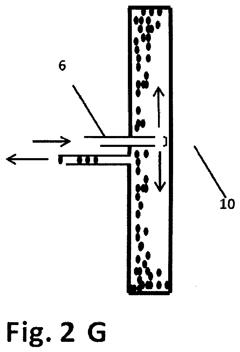

**Fig. 2** zeigt ein Vorratsgefäß mit verschiedenen Varianten zur Anordnung der eingestochenen Hohlnadeln. Die Pfeile zeigen die Richtung des Flüssigkeitsstroms.

In **Fig. 2A** sind die erste und zweite Hohlnadel durch die Oberseite eingestochen, die erste Hohlnadel ragt jedoch so tief ins Vorratsgefäß hinein, dass ihre Austrittsöffnung sich nahe dem Innenboden befindet.

In **Fig. 2B** ist die erste Hohlnadel durch die Oberseite und die zweite Hohlnadel durch den Innenboden eingestochen, so dass der Flüssigkeitsstrom von oben nach unten verläuft.

In **Fig. 2C** ist im Vorratsggefäß eine Scheidewand (12) eingezogen, die einen Kurzschluss der Strömung zwischen den Austrittsöffnungen der ersten und der zweiten Hohlnadel verhindert, welche beide nahe der Oberseite lokalisiert sind.

In **Fig. 2D** ist die erste Hohlnadel durch die Oberseite eingestochen und die zweite durch die Seitenwand nahe dem Innenboden. Da beide Nadeln nur knapp in das Gefäß hineinragen, sind die Austrittsöffnungen nahe der Oberseite bzw. nach dem Innenboden lokalisiert.

In **Fig. 2E** sind beide Hohlnadel relativ zur Längsachse des Gefäßes mittig eingestochen. Durch die Verzweigung des Stromes an der Austrittsöffnung der ersten Hohlnadel ist ein Kurzschluss jedoch verhindert und jeweils ein Teil des Stroms ist in Richtung der Oberseite und des Innenbodens gerichtet.

In **Fig. 2F** dient neben der ersten Hohlnadel noch eine dritte eingestochene Hohlnadel zum Einleiten der Spülflüssigkeit; der Strom der aus ihnen austretenden Spülflüssigkeit ist in Richtung der Oberseite bzw. des Innenbodens gerichtet, um die Anlagerung von Beads zu verhindern. Die zweite Hohlnadel ist relativ zur Längsachse des Vorratsgefäßes mittig eingestochen.

In **Fig. 2G** sind beide Hohlnadeln aus der gleichen Richtung relativ zur Längsachse des Gefäßes mittig eingestochen. Durch die Verzweigung des Stromes an der Austrittsöffnung der ersten Hohlnadel und dadurch, dass eine der Hohlnadeln nur knapp über die Wand hinaus eingestochen ist, die zweite weiter bis kurz vor die der Einstichstelle gegenüberliegenden Wand eingeführt ist, wird ein Kurzschluss verhindert.

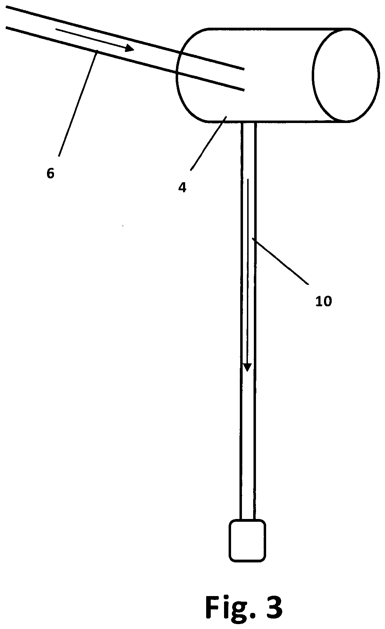

**Fig. 3** zeigt ein Foto des vorgeschlagenenVorratsgefäßes. Die erste und zweite Hohlnadel sind relativ zur Längsachse mittig und auf die Bodenebene prozejiert senkrecht zu einander eingestochen. Die Pfeile zeigen die Richtung des Flüssigkeitsstroms.

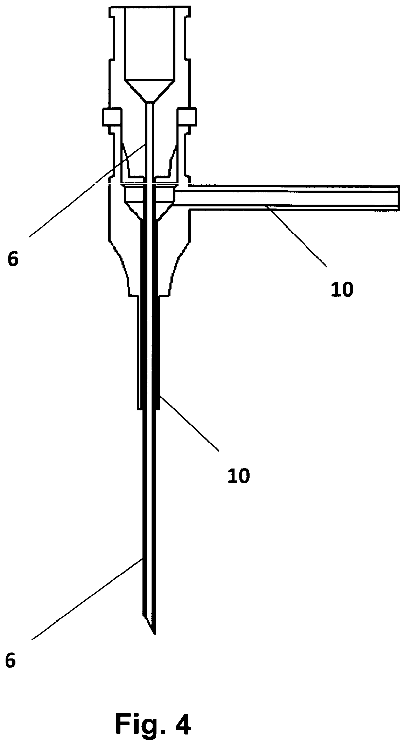

**Fig. 4** zeigt eine beispielhafte und vorzugsweise verwendbare Koaxialnadel. Sie kann in die Oberseite des Vorratsgefäßes eingestochen werden. Die erste Hohlnadel, durch die Spülflüssigkeit eingeleitet wird, ist im Innneren der zweiten Hohlnadel angeordnet, gleichzeitig ragt die erste Hohlnadel deutlich weiter ins Vorratsgefäß hinein, um einen Kurzschluss der eingeleiteten Spülflüssigkeit und der über die Eintrittsöffnung der zweiten Hohlnadel ausgetriebenen Flüssigkeit zu verhindern.

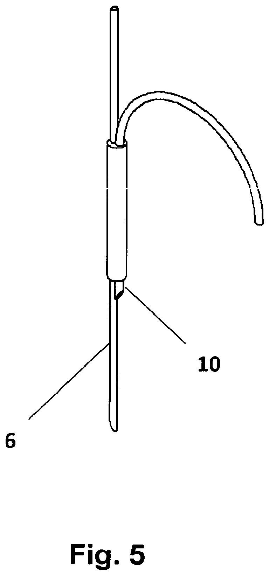

**Fig. 5** zeigt eine beispielhafte verwendbare Doppelnadel, die ebenfalls in die Oberseite des Vorratsgefäßes eingestochen werden kann, beispielsweise durch eine die Oberseite versiegelnde Folie. Wiederum ragt die erste Hohlnadel deutlich weiter ins Vorratsgefäß hinein, um einen Kurzschluss der eingeleiteten Spülflüssigkeit und der über die Eintrittsöffnung der zweiten Hohlnadel ausgetriebenen Flüssigkeit zu verhindern.

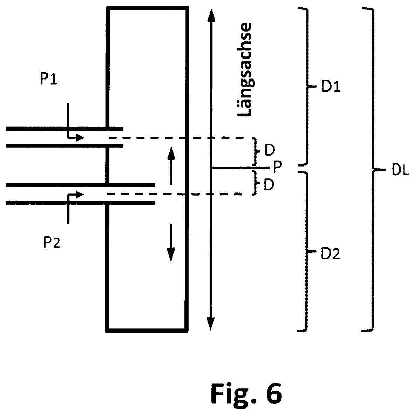

**Fig. 6** illustriert das mittige Einstechen der beiden Hohlnadeln. Der Punkt **P** auf der Längsachse, der zwischen dem Einstichpunkt der ersten Hohlnadel **P1** und dem Einstichpunkt der zweiten Hohlnadel **P2** liegt und zu beiden Einstichpunkten auf der Längsachse den gleichen Abstand **D** aufweist, auch zu den beiden Enden des Vorratsgefäßes entlang dessen Längsachse den gleichen Abstand aufweist, wobei bei letzterem Abstand eine Abweichung möglich ist, d.h. eine Verlängerung des Abstandes der Einstichstelle der ersten Hohlnadel zum ihr zugewandten Ende des Vorratsgefäßes **D1** und eine entsprechende Verkürzung des Abstandes der Einstichstelle der zweiten Hohlnadel zum anderen Ende des Vorratsgefäßes **D2.**

### Bezugszeichenliste:

- 1: Spülflüssigkeitsreservoir
- 2: Spülflüssigkeit
- 3: Mittel zum Pumpen
- 4: Vorratsgefäß
- 5: Flüssigkeit
- 6: Erste Hohlnadel
- 7: Austrittsöffnung der ersten Hohlnadel
- 8: Beads
- 9: Austrittsöffnung der zweiten Hohlnadel
- 10: Zweite Hohlnadel
- 11: Reaktionsgefäß
- 12: Scheidewand
- 13: Oberseite
- 14: Innenboden

## Patentansprüche

1. Verfahren zum Überführen einer Flüssigkeit aus einem Vorratsgefäß in ein Reaktionsgefäß, umfassend die Schritte
a) Bereitstellen des Vorratsgefäßes, wobei das Vorratsgefäß einen Innenboden und eine Oberseite aufweist und mit einem Verschluss druckabschließend verschlossen ist und wobei die Beschaffenheit des Vorratsgefäßes das druckabschließende Einstechen von wenigstens zwei Hohlnadeln gestattet,
b) druckabschließendes Einstechen einer ersten Hohlnadel, die mit einem Spülflüssigkeitsreservoir verbunden ist, und
c) druckabschließendes Einstechen einer zweiten Hohlnadel, die mit dem Reaktionsgefäß verbunden ist,
d) Einleiten von Spülflüssigkeit über die erste Hohlnadel aus dem Spülflüssigkeitsreservoir in das Vorratsgefäß unter Austreiben der Flüssigkeit über die zweite Hohlnadel aus dem Vorratsgefäß in das Reaktionsgefäß,
wobei die beiden Hohlnadeln in Form einer Doppelnadel ausgebildet sind, bei welcher die beiden Hohlnadeln über eine Längsachse in paralleler Anordnung mit gleicher Orientierung miteinander verbunden sind,
und wobei die erste Hohlnadel mehrere Austrittsöffnungen an ihrem Ende aufweist, so dass der Strahl der daraus austretenden Flüssigkeit geteilt wird, so dass er in wenigstens zwei verschiedene Richtungen gerichtet ist.

2. Verfahren nach Anspruch 1,
wobei die Enden der beiden Hohlnadeln entlang der Querachse des Vorratsgefäßes an verschiedenen Punkten liegen, so dass ein Kurzschluss vermieden wird, bei welchem aus der ersten Hohlnadel austretende Flüssigkeit direkt ohne nennenswerte Durchwanderung des Volumens der Flüssigkeit in die zweite Hohlnadel eintritt.

3. Verfahren gemäß Anspruch 1, weiter umfassend:
e) Kontaktieren der Flüssigkeit im Reaktionsgefäß mit wenigstens einem Reaktanden unter Ablauf einer Reaktion, und
f) optional währenddessen oder anschließend: Detektieren der Reaktion.

4. Vorrichtung zum Überführen einer Flüssigkeit aus einem Vorratsgefäß in ein Reaktionsgefäß umfassend
ein Vorratsgefäß, wobei das Vorratsgefäß einen Innenboden und eine Oberseite aufweist und mit einem Verschluss druckabschließend verschlossen ist und wobei die Beschaffenheit des Vorratsgefäßes das druckabschließende Einstechen von wenigstens zwei Hohlnadeln gestattet, wobei das Vorratsgefäß über eine Zuleitung mit einer ersten Hohlnadel verbunden ist,
ein Mittel zum Halten des Vorratsgefäßes,
ein Reaktionsgefäß, das über eine Zuleitung mit einer zweiten Hohlnadel verbunden ist,
ein Spülflüssigkeitsreservoir,
ein Mittel zum Pumpen der Flüssigkeit,
ein Mittel zum Einstechen der ersten Hohlnadel in das Vorratsgefäß,
ein Mittel zum Einstechen der zweiten Hohlnadel in das Vorratsgefäß,
optional wenigstens ein Mittel zur Detektion der Reaktion im Reaktionsgefäß,
wobei die erste und die zweite Hohlnadel zum druckabschließenden Einstechen in das Vorratsgefäß und zum Überführen von Flüssigkeit eingerichtet sind, im Falle der ersten Hohlnadel aus dem Spülflüssigkeitsreservoir in das Vorratsgefäß und im Falle der zweiten Hohlnadel aus dem Vorratsgefäß in das Reaktionsgefäß,
wobei die beiden Hohlnadeln in Form einer Doppelnadel ausgebildet sind, bei welcher die beiden Hohlnadeln über eine Längsachse in paralleler Anordnung mit gleicher Orientierung miteinander verbunden sind,
und wobei die erste Hohlnadel mehrere Austrittsöffnungen an ihrem Ende aufweist, so dass der Strahl der daraus austretenden Flüssigkeit geteilt wird, so dass er in wenigstens zwei verschiedene Richtungen gerichtet ist.

5. Vorrichtung nach Anspruch 4,
wobei die Enden der beiden Hohlnadeln entlang der Querachse des Vorratsgefäßes an verschiedenen Punkten liegen, so dass ein Kurzschluss vermieden wird, bei welchem aus der ersten Hohlnadel austretende Flüssigkeit direkt ohne nennenswerte Durchwanderung des Volumens der Flüssigkeit in die zweite Hohlnadel eintritt.

6. Verfahren oder Vorrichtung gemäß einem der Ansprüche 1 bis 5,
wobei die Flüssigkeit eine inhomogene flüssige Phase darstellt,
bevorzugt eine wässrige Lösung umfassend Beads.

7. Verfahren oder Vorrichtung gemäß einem der Ansprüche 1 bis 5,
wobei die Flüssigkeit eine homogene flüssige Phase darstellt,
bevorzugt umfassend ein biologisches oder chemisches Agens in wässriger Lösung oder flüssige Probe, besonders bevorzugt eine Blutprobe, am bevorzugtesten Serum.

8. Verfahren oder Vorrichtung gemäß einem der Ansprüche 1 bis 5,
wobei die Austrittsöffnungen der ersten Hohlnadel derart eingerichtet sind, dass sich der Strom der eingeleiteten Spülflüssigkeit verzweigt und
ein Teil davon in Richtung der Oberseite und ein anderer Teil davon in Richtung des Innenbodens gerichtet ist.

## Claims

1. A method for transferring a liquid from a storage vessel to a reaction vessel, comprising the steps
a) providing the storage vessel, wherein the storage vessel has an inner base and an upper side and is closed in a pressure-sealing manner by a closure and wherein the nature of the storage vessel allows the pressure-sealing plunging of at least two hollow needles,
b) pressure-sealing plunging of a first hollow needle which is connected to a flushing-liquid reservoir, and
c) pressure-sealing plunging of a second hollow needle which is connected to the reaction vessel,
d) introducing flushing liquid from the flushing-liquid reservoir into the storage vessel via the first hollow needle with outward driving of the liquid from the storage vessel into the reaction vessel via the second hollow needle,
wherein both hollow needles are in the form of a double needle, in which both hollow needles are joined with the same orientation with parallel arrangement at least along the longitudinal axis.
and wherein the first hollow needle has several escape openings at its end so that the jet of liquid exiting therefrom is split so that it is directed in at least two different directions.

2. The method as claimed in claim 1,
wherein the ends of both hollow needles are located at different points along the transverse axis of the storage vessel so as to avoid a short circuit in which liquid escaping from the first hollow needle directly enters the second hollow needle without appreciable migration through the volume of the liquid.

3. The method as claimed in claim 1, further comprising:
e) contacting of the liquid in the reaction vessel with at least one reactant with execution of a reaction, and
f) optionally at the same time or afterwards: detecting the reaction.

4. A device for transferring a liquid from a storage vessel to a reaction vessel, comprising
a storage vessel, wherein the storage vessel has an inner base and an upper side and is closed in a pressure-sealing manner by a closer and wherein the nature of the storage vessel allows the pressure-sealing plunging of at least two hollow needles, wherein the storage vessel is connected to a first hollow needle via a feed line,
a means for holding the storage vessel,
a reaction vessel which is connected to a second hollow needle via a feed line,
a flushing-liquid reservoir,
a means for pumping the liquid,
a means for plunging the first hollow needle into the storage vessel,
a means for plunging the second hollow needle into the storage vessel,
optionally, at least one means for detection of the reaction in the reaction vessel,
wherein the first and the second hollow needle are configured for the pressure-sealing plunging into the storage vessel and for transferring liquid, from the flushing-liquid reservoir to the storage vessel in the case of the first hollow needle and from the storage vessel to the reaction vessel in the case of the second hollow needle,
wherein both hollow needles are in the form of a double needle, in which both hollow needles are joined with the same orientation with parallel arrangement at least along the longitudinal axis,
and wherein the first hollow needle has several escape openings at its end so that the jet of liquid exiting therefrom is split so that it is directed in at least two different directions.

5. The device as claimed in claim 4,
wherein the ends of both hollow needles are located at different points along the transverse axis of the storage vessel so as to avoid a short circuit in which liquid escaping from the first hollow needle directly enters the second hollow needle without appreciable migration through the volume of the liquid.

6. The method or device as claimed in any of claims 1 to 5,
wherein the liquid is an inhomogeneous liquid phase,
preferably an aqueous solution comprising beads.

7. The method or device as claimed in any of claims 1 to 5,
wherein the liquid is a homogeneous liquid phase,
preferably comprising a biological or chemical agent in aqueous solution or a liquid sample, particularly preferably a blood sample, most preferably serum.

8. The method or device as claimed in any of claims 1 to 5,
wherein the escape opening of the first hollow needle is configured such that the flow of the introduced flushing liquid branches and
a portion thereof is directed in the direction of the upper side and another portion thereof is directed in the direction of the inner base.

## Revendications

1. Procédé pour le transfert d'un liquide d'un récipient de stockage dans un récipient de réaction, comprenant les étapes suivantes :
a) la fourniture du récipient de stockage, le récipient de stockage présentant un fond intérieur et un côté supérieur, et étant fermé de manière étanche à la pression par une fermeture, et la nature du récipient de stockage permettant l'insertion étanche à la pression d'au moins deux aiguilles creuses,
b) l'insertion étanche à la pression d'une première aiguille creuse, qui est reliée à un réservoir de liquide de rinçage, et
c) l'insertion étanche à la pression d'une deuxième aiguille creuse, qui est reliée au récipient de réaction,
d) l'introduction de liquide de rinçage par l'intermédiaire de la première aiguille creuse à partir du réservoir de liquide de rinçage dans le récipient de stockage, avec expulsion du liquide par l'intermédiaire de la deuxième aiguille creuse du récipient de stockage dans le récipient de réaction,
dans lequel les deux aiguilles creuses sont configurées sous la forme d'une aiguille double, dans laquelle les deux aiguilles creuses sont reliées l'une à l'autre par l'intermédiaire d'un axe longitudinal dans un agencement parallèle avec la même orientation,
et dans lequel la première aiguille creuse présente plusieurs ouvertures de sortie à son extrémité, de telle sorte que le jet du liquide qui en sort est divisé, de telle sorte qu'il est dirigé dans au moins deux directions différentes.

2. Procédé selon la revendication 1, dans lequel les extrémités des deux aiguilles creuses sont situées en des points différents le long de l'axe transversal du récipient de stockage, de manière à éviter un court-circuit dans lequel du liquide sortant de la première aiguille creuse pénètre directement dans la deuxième aiguille creuse sans traverser de manière appréciable le volume du liquide.

3. Procédé selon la revendication 1, comprenant en outre :
e) la mise en contact du liquide dans le récipient de réaction avec au moins un réactif, avec déroulement d'une réaction, et
f) facultativement, pendant ou après : la détection de la réaction.

4. Dispositif pour le transfert d'un liquide d'un récipient de stockage dans un récipient de réaction, comprenant :
un récipient de stockage, le récipient de stockage présentant un fond intérieur et un côté supérieur, et étant fermé de manière étanche à la pression par une fermeture, et la nature du récipient de stockage permettant l'insertion étanche à la pression d'au moins deux aiguilles creuses, le récipient de stockage étant relié à une première aiguille creuse par l'intermédiaire d'une conduite d'alimentation,
un moyen de maintien du récipient de stockage,
un récipient de réaction, qui est relié par l'intermédiaire d'une conduite d'alimentation à une deuxième aiguille creuse,
un réservoir de liquide de rinçage,
un moyen pour pomper le liquide,
un moyen pour insérer la première aiguille creuse dans le récipient de stockage,
un moyen pour insérer la deuxième aiguille creuse dans le récipient de stockage,
facultativement au moins un moyen pour détecter la réaction dans le récipient de réaction,
la première et la deuxième aiguille creuse étant conçues pour être insérées de manière étanche à la pression dans le récipient de stockage et pour transférer du liquide, dans le cas de la première aiguille creuse, du réservoir de liquide de rinçage dans le récipient de stockage et, dans le cas de la deuxième aiguille creuse, du récipient de stockage dans le récipient de réaction,
dans lequel les deux aiguilles creuses sont configurées sous la forme d'une aiguille double, dans laquelle les deux aiguilles creuses sont reliées l'une à l'autre par l'intermédiaire d'un axe longitudinal dans un agencement parallèle avec la même orientation,
et dans lequel la première aiguille creuse présente plusieurs ouvertures de sortie à son extrémité, de telle sorte que le jet du liquide qui en sort est divisé, de telle sorte qu'il est dirigé dans au moins deux directions différentes.

5. Dispositif selon la revendication 4, dans lequel les extrémités des deux aiguilles creuses sont situées en des points différents le long de l'axe transversal du récipient de stockage, de manière à éviter un court-circuit dans lequel du liquide sortant de la première aiguille creuse pénètre directement dans la deuxième aiguille creuse sans traverser de manière appréciable le volume du liquide.

6. Procédé ou dispositif selon l'une quelconque des revendications 1 à 5,
dans lequel le liquide est une phase liquide non homogène,
de préférence une solution aqueuse comprenant des billes.

7. Procédé ou dispositif selon l'une quelconque des revendications 1 à 5,
dans lequel le liquide est une phase liquide homogène,
de préférence comprenant un agent biologique ou chimique dans une solution aqueuse ou un échantillon liquide, de manière particulièrement préférée un échantillon de sang, de manière préférée entre toutes du sérum.

8. Procédé ou dispositif selon l'une quelconque des revendications 1 à 5,
dans lequel les ouvertures de sortie de la première aiguille creuse sont conçues de telle sorte que le courant du liquide de rinçage introduit se ramifie et
qu'une partie de celui-ci est dirigée en direction du côté supérieur et une autre partie de celui-ci en direction du fond intérieur.
